(19) Europäisches Patentamt
European Patent Office
Office européen des brevets

(11) **EP 1 591 237 B1**

(12) **EUROPÄISCHE PATENTSCHRIFT**

(45) Veröffentlichungstag und Bekanntmachung des Hinweises auf die Patenterteilung:
**30.04.2008   Patentblatt 2008/18**

(51) Int Cl.:
**B32B 27/36** (2006.01)      **C08J 5/18** (2006.01)

(21) Anmeldenummer: **05005550.8**

(22) Anmeldetag: **15.03.2005**

(54) **Weisse, dampfsterilisierbare und extrusionsbeschichtbare Polyesterfolie**

White, vapour sterilisable, extrusion coatable polyester film

Péllicule de polyester blanc, stérilisable à la vapeur, stratifiable par extrusion

(84) Benannte Vertragsstaaten:
**DE FR GB IT LU**

(30) Priorität: **27.04.2004   DE 102004020620**
**16.07.2004   DE 102004034379**

(43) Veröffentlichungstag der Anmeldung:
**02.11.2005   Patentblatt 2005/44**

(73) Patentinhaber: **Mitsubishi Polyester Film GmbH**
**65203 Wiesbaden (DE)**

(72) Erfinder:
• **Kiehne, Thorsten Dr.**
**Nagahama**
**Shiga, 526-0031 (JP)**

• **Pfeiffer, Herbert Dr. Professor**
**55126 Mainz (DE)**
• **Hilkert, Gottfried Dr.**
**55291 Saulheim (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 359 017            EP-A- 0 605 130**
**EP-A- 0 687 636            EP-A- 1 176 004**
**US-A- 5 082 738**

**Beschreibung**

Die Erfindung betrifft die Verwendung einer ein- oder mehrschichtigen, weißen, biaxial orientierten Polyesterfolie, enthaltend einen thermoplastischen Polyester, die zumindest auf einer Seite mit einer wasserlöslichen haftvermittelnden Schicht aus einem hydrolysierten aminofunktionalen Silan beschichtet ist, als dampfsterilisierbare Folie.

Eine bekannte Anwendung von weiß eingefärbten, biaxial orientierten Polyesterfolien sind z. B. Deckel für Joghurtbecher. Sie werden dort alternativ zu Aluminiumfolien eingesetzt. Derartige Deckel werden auf der Außenseite bedruckt und geprägt und auf der Innenseite mit einem Lack oder Hotmelt versehen, mit dem die Deckel auf die Becher geklebt werden. Zur Verbesserung der Haltbarkeit des Joghurts müssen sowohl der Becher als auch der Deckel genügend Lichtschutz gewährleisten. Dies geschieht in der Regel durch Einfärben der Deckel mit geeigneten Pigmenten. Daneben ist es für spezielle Anwendungen wünschenswert, wenn der komplette Deckel oder das komplette System sterilisierbar, zumindest aber dampfsterilisierbar ist. Eine weitere Forderung an die Deckelfolie ist, dass sie beim Abziehen vom Becher weder delaminiert noch ein- und weiterreißt. Die dazu erforderlichen Eigenschaften erhält die Folie durch die biaxiale Streckung und durch eine entsprechend große Dicke. Die mechanischen Eigenschaften des Deckels (Steifigkeit, Durchstoßfestigkeit, Weiterreißfestigkeit) verbessern sich überproportional mit der Dicke der Folie. Für die Deckelanwendung bei Joghurt haben sich Polyesterfolien mit einer Dicke von 30 bis 90 μm bewährt. Die Dicke der Folie kann nicht beliebig groß sein, da mit der Dicke die Materialkosten anwachsen und die Siegeltaktzeiten zurückgehen, was aus wirtschaftlicher Sicht unerwünscht ist. Es ist ein Trend zu geringeren Dicken zu beobachten.

Deckel aus Polyesterfolien haben im allgemeinen eine Reihe von Vorteilen:

- Der Deckel hat eine glatte, hoch glänzende Oberfläche, die eine exzellente Farbwiedergabe garantiert und dadurch optisch sehr ansprechend wirkt.
- Die Folie hat im Vergleich zu konventionellem Material eine bis zu 700 % höhere Durchstoßfestigkeit, was einen wesentlich höheren Produktschutz zur Folge hat.
- Der Deckel ist leicht zu öffnen, ohne dass Fragmente des Deckels am Becher hängen bleiben, wie es bei konventionellen Materialien z. B. Aluminiumfolien beobachtet wird. Diese Eigenschaft wird insbesondere vom Verbraucher geschätzt.
- Die vollständige Trennung von Becher und Deckel ist von großem Vorteil für eine Rezyklierbarkeit der beiden Materialien. Die Deckelfolie besteht aus thermoplastischem Polyester, der exzellent rezyklierbar ist. Das Produkt ist damit umweltfreundlich.
- Weiterhin ist die Polyesterfolie für die Deckelanwendung infolge ihrer hohen Steifigkeit und ihrem guten Gleitvermögen hervorragend verarbeitbar.
- Außerdem ist der Deckel absolut metallfrei. Dies garantiert eine sehr hohe Sicherheit bei der Metalldetektierung, die bei der Herstellung von Lebensmitteln immer häufiger angewendet wird. Mit der Methode kann damit der Anteil an eventuell im Füllgut enthaltenen metallischen Bestandteilen mit hoher Genauigkeit bestimmt werden.

Versuche, eine herkömmliche transparente Folie durch Pigmentzusatz mit der gewünschten Eigenschaftskombination auszustatten, scheiterten. Die Folie delaminierte beim Abziehen vom Joghurtbecher.

Verarbeiter verwenden bestimmte Kriterien für das Verhalten der Folien bei der Weiterverarbeitung zu Joghurtbechern. Die bei der Herstellung von Deckelfolien üblicher Weise verwendeten Prüfgrößen sind der R-Wert und das $e_{max}$-Verhältnis. Der R-Wert kann als ein Maß für die Orientierung angegeben werden und wird direkt nach Herstellung der Folie in Folienbahnmitte gemessen. Das $e_{max}$-Verhältnis beschreibt die Orientierungsverteilung über die Bahnbreite (der sogenannte bow) und wird ebenfalls bei der Herstellung der Folie gemessen, allerdings in diskreten Abständen über die gesamte Breite der Folienbahn (vgl. unter Messmethoden). Bei transparenten Folien (nicht den hier vorliegenden weißen Folien) liegen die Werte für den R-Wert in einem Bereich von 45 bis 48 und für das $e_{max}$-Verhältnis in einem Bereich von 2,6 bis 2,8.

Untersuchungen haben gezeigt, dass diese Werte nicht von transparenten Folien auf die vorliegenden weißen Folien übertragen werden können. Werden für weiße Folie obige angegebenen Werte eingehalten, so führt dies im Allgemeinen zu einer Delaminierung der Folie. Die Folie delaminiert in sich, sie reißt in Dickenrichtung ein, der Riss zerstört die Folie und die Folie reißt weiter.

Die oben genannten Eigenschaften werden von den nach dem Stand der Technik bekannten Folien nicht in ihrer Gesamtheit erreicht.

So beschreibt beispielsweise die EP-A-0 605 130 eine mehrschichtige Folie für die Deckelanwendung, die mindestens eine opake Schicht und mindestens eine transparente Schicht aus kristallinem Polyester aufweist. Weiterhin wird die Folie durch einen Deformations-Index beschrieben, der größer/gleich als 2,5 % sein soll. Daneben kann die Folie mit bestimmten Substanzen beschichtet werden, womit die Adhäsion zu Druckfarben und/oder Tinten verbessert wird. Über die R-Werte und das $e_{max}$-Verhältnis der Folie gibt die Schrift keine Auskunft. Eine nach der EP-A-0 605 130 (Beispiel 1, Längsstrecktemperatur ca. 80 °C, Streckverhältnis bei der Längsstreckung 3,3) nachgestellte Folie delaminierte, außerdem zeigte sie ein schlechtes Verarbeitungsverhalten, da sich die Folie nach dem Ausstanzen zu den Deckeln curlte.

Aus wirtschaftlicher Sicht ist es notwendig, die Kosten für die Herstellung der Deckelfolie permanent zu senken. Ein wesentlicher Hebel hierfür ist die Dicke der Folie. Eine geringere Dicke des Deckels geht direkt einher mit einer Senkung der Materialkosten und führt auf Grund niedriger Siegeltaktzeiten zu höheren Abfüllgeschwindigkeiten. Die Dicke des Deckels kann jedoch nicht beliebig verringert werden, da dies zu Verarbeitungs- und zu Handlingproblemen führt. Deckel aus Polyesterfolie mit zu geringer Dicke neigen zum Einreißen und zum Delaminieren. Eine Produktsicherheit und der Vorteil der 100%igen Trennung von Deckel und Becher ist dann nicht mehr gegeben. Die Gefahr des Einreißens und der Delaminierung des Deckels wird umso größer, je mehr Pigmente und um so größere Pigmente in die Polyesterfolie eingearbeitet werden. Pigmente, insbesondere gröbere, bilden in der Folie Schwachstellen, an denen die Zerstörung der Folie beim Abziehen vom Becher beginnt.

Die EP-A-1 176 004 beschreibt Polyesterfolien, die R-Werte von kleiner als 43 N/mm$^2$ und ein $e_{max}$-Verhältnis von kleiner als 2,5 besitzen. Die Folien können auch beschichtet sein. Eine Beschichtung mit einer dampfsterilisierfesten Schicht aus einem hydrolysierten aminofunktionalen Silan wird jedoch nicht beschrieben.

Aufgabe der Erfindung ist es daher, eine weiße, biaxial orientierte Polyesterfolie insbesondere für die Deckel-Anwendung bereitzustellen, die sich gegenüber den am Markt etablierten Polyesterfolien durch verbesserte Eigenschaften auszeichnet und die Nachteile des Standes der Technik nicht aufweist.

Gelöst wird die Aufgabe durch die Verwendung einer ein- oder mehrschichtigen, mindestens eine Basisschicht B enthaltenden, weißen, biaxial orientierten Polyesterfolie, enthaltend einen thermoplastischen Polyester, die zumindest auf einer Seite mit einem haftvermittelnden hydrolysierten aminofunktionalen Silan beschichtet ist und deren R-Wert kleiner als 43 N/mm$^2$ ist und deren $e_{max}$-Verhältnis kleiner als 2,5 ist, als dampfsterilisierbare Folie.

Überraschenderweise hat sich gezeigt, dass durch die Verwendung einer haftvermittelnden Schicht aus einem hydrolysierten aminofunktionalen Silan, die als wässrige Dispersion auf die Folie aufgebracht ist, die gewünschte Kombination der guten Haftung zu Farben, Primer, Kleber, metallischen und keramischen Schichten und der Sterilisierbarkeit erzielt wird.

Die Folie weist folgende Eigenschaftskombination auf:

- wirtschaftliche Herstellbarkeit, gute Wickelbarkeit, gute Verarbeitbarkeit;
- gute Adhäsion mindestens einer Folienseite zu Farben, Klebern, Siegellacken;
- dampfsterilisierbar, d. h. sie weist eine gute Haftung zu Farben, Kleber, Primer, metallischen und keramischen Schichten auch nach der Dampfsterilisation auf;
- sehr gutes Abziehverhalten vom Becher, keine Delaminierung, kein Ein- und Weiterreißen;
- gute optische Eigenschaften, insbesondere auch bei Zugabe von Eigenregenerat bei der Folienherstellung, und gute Lichtschutzeigenschaften.

Durch das Aufbringen von metallischen oder keramischen Schichten auf die Folie kann beispielsweise die Barrierewirkung des Deckels gegen die Durchlässigkeit von Sauerstoff, Aroma oder Wasserdampf deutlich verbessert werden.

Beschrieben wird auch ein Verfahren zur Verbesserung der Haftung der Folie zu Farben, Klebern, Primern und zu metallischen und keramischen Schichten nach der Dampfsterilisierung. Des weiteren wird ein Verfahren beschrieben, mit dem die Folie durch die haftvermittelnde Beschichtung für eine nachfolgende Extrusionsbeschichtung mit anderen Polymeren aufnahmebereit gemacht wird. Sie verliert dabei aber nicht ihre sonstigen vorteilhaften Eigenschaften, z.B. eine gute Optik. Dies ist ein wichtiger Punkt, vor allem für eine mögliche Verwendung von Eigenregenerat bei der Herstellung der Folie, welches das Beschichtungsmaterial zwangsweise enthält.

Die Folie ist in der Regel einschichtig aufgebaut und besteht dann aus der Basisschicht B und der haftvermittelnden Schicht, die als Lösung oder als wässrige Dispersion auf die Folie aufgebracht wird. Sie kann daneben aber auch mehrschichtig aufgebaut sein. Für diesen Fall hat es sich als günstig erwiesen, den Schichtaufbau der Folie symmetrisch zu gestalten. Vorteilhafte Ausführungsformen mehrschichtiger Folien sind beispielsweise ABA oder ACBCA, wobei unter A die äußeren Deckschichten, unter C die Zwischenschichten und unter B die Basisschicht verstanden wird. Bei den mehrschichtigen Folien befindet sich die haftvermittelnde Schicht stets auf der Außenseite der Folie.

Die Basisschicht B der Folie besteht zu mindestens 80 Gew.-%, bevorzugt zu mindestens 85 Gew.-% und insbesondere zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, insbesondere zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. anderen Dicarbonsäuren. Bevorzugt besteht die Basisschicht aus PET. Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$. wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$ Alkandisäuren besonders geeignet, wobei der Alkanteil geradkettig oder verzweigt sein kann.

Neben Polyestern kann die Basisschicht B andere thermoplastische Polymere, Additive und Pigmente enthalten. Dafür geeignete Polymere sind beispielsweise aliphatische und aromatische Polyamide, Polyolefine und cyclische Olefincopolymere (COC). Geeignete Additive und Pigmente sind weiter unten beschrieben.

Die Herstellung der Polyester kann z.B. nach dem bekannten Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für eventuell vorhandene Deckschichten A oder für eventuell vorhandene Zwischenschichten C können prinzipiell die gleichen Polymere verwendet werden, wie sie zuvor für die Basisschicht B beschrieben wurden.

Der R-Wert der Folie wird direkt nach ihrer Herstellung bestimmt, wobei die erforderlichen Proben aus der Mitte der Folienbahn entnommen werden. Das $e_{max}$-Verhältnis wird ebenfalls direkt nach der Herstellung der Folie ermittelt, hierbei werden die Prüflinge jedoch in definierten Abständen aus der Gesamtbreite der Folienbahn herausgetrennt.

Die Folie ist durch einen niedrigen R-Wert gekennzeichnet. Der R-Wert ist ein Maß für die Orientierung der Folie und ersetzt im vorliegenden Fall die sonst üblichen Orientierungsmaße Δn oder Δp. Diese können nur bei einer transparenten Folie gemessen werden, nicht aber bei der vorliegenden weißen Folie.

Der R-Wert der Folie wird in der Mitte der Folienbahn unter einem Winkel von 45° zur Maschinenrichtung (MD-Richtung) gemessen und zwar einmal rechts zur MD-Richtung und das andere Mal links zur MD-Richtung (siehe Messmethoden). Bei dieser Vorschrift wird berücksichtigt, dass bei Joghurtdeckeln die Folie üblicherweise unter einem Winkel von 45° zur Maschinenrichtung vom Becher abgezogen wird.

Bei der Herstellung des Deckels (Bedrucken, Stanzen) wird von der Rolle gearbeitet. Die Rollenrichtung (= Bahnrichtung) der Folie entspricht dabei der MD-Richtung. Die Folienbahn wird dabei derart bedruckt, dass die auszustanzenden Deckel entweder exakt in MD-Richtung oder exakt in TD-Richtung liegen (TD = 90° zu MD). Daraus folgt, dass die Abziehrichtung des Deckels immer mit dem 45°-Winkel zur MD-Richtung zusammenfällt. Aus diesem Grunde ist es erforderlich, den R-Wert unter 45° zur MD-Richtung zu bestimmen.

Es wurde gefunden, dass das Aufreiß- und Weiterreißverhalten des Deckels umso günstiger bzw. geringer ist, je kleiner der R-Wert der Folie ist. Die Tendenz der Folie zum Delaminieren ist dann sehr gering. Der R-Wert der Folie beträgt weniger als 43 N/mm², bevorzugt weniger als 42 N/mm² und insbesonders weniger als 40 N/mm². Im Gegensatz dazu ist im anderen Fall (R-Wert größer als 43 N/mm²) die Folie anfälliger gegenüber Einreißen und Delaminierung Dieser Nachteil muss dann über eine beträchtlich größere Dicke der Folie wettgemacht werden.

Die Folie ist daneben durch ein niedriges $e_{max}$-Verhältnis gekennzeichnet. Das $e_{max}$-Verhältnis wird in definierten Abständen über die gesamte Bahnbreite der Maschinenrolle gemessen. Dies geschieht wiederum unter einem Winkel von 45° zur MD.Richtung und zwar einmal rechts zur MD-Richtung und das andere Mal links zur MD-Richtung (siehe Messmethode). In der Folienbahnmitte ist das $e_{max}$-Verhältnis nahezu eins und vergrößert sich in der Regel umso mehr, je näher man zu den Folienrändern gelangt. Das $e_{max}$-Verhältnis beschreibt die Eigenschaften der Folie über die Breite der Rolle, insbesondere die Änderung der Eigenschaften gegenüber der Mitte der Folienbahn. Die anwendungstechnischen Voraussetzungen sind umso besser, je geringer das $e_{max}$-Verhältnis ist, d.h. je gleichmäßiger die Folieneigenschaften über die Breite sind.

Das $e_{max}$-Verhältnis der Folie beträgt weniger als 2,5, bevorzugt weniger als 2,2 und besonders bevorzugt weniger als 2,0. Im anderen Fall ($e_{max}$-Verhältnis ist größer als 2,5) ist die Folie anfälliger gegenüber Einreißen und Delaminierung. Dieser Nachteil muss dann ebenfalls über eine größere Dicke der Folie wettgemacht werden, was unwirtschaftlich ist.

Zur Erzielung der vorgenannten Eigenschaften, insbesondere des gewünschten Weißgrades der Folie, werden in die Basisschicht B, eventuell aber auch statt dessen oder zusätzlich in vorhandene andere Schichten, dafür notwendige Pigmente eingearbeitet. In Frage kommen z.B. Titandioxid, Calciumcarbonat, Bariumsulfat, Zinksulfid oder Zinkoxid. Bevorzugt wird TiO$_2$ als alleiniges einfärbendes Pigment verwendet. Es wird bevorzugt als Extrusionsmasterbatch (die Titandioxid-Konzentration ist hier deutlich höher als in der biaxial orientierten Folie) dem Originalrohstoff zugegeben. Typische Werte für die TiO$_2$-Konzentration im Extrusionsmasterbatch sind 50 Gew.-% Titandioxid. Das Titandioxid kann sowohl vom Rutil-Typ als auch vom Anatas-Typ sein. Vorzugsweise wird Titandioxid vom Rutil-Typ verwendet. Die Korngröße des Titandioxids liegt in der Regel zwischen 0,05 und 0,5 $\mu$m, bevorzugt zwischen 0,1 und 0,3 $\mu$m. Die Folie erhält durch die eingearbeiteten Pigmente ein brillantes weißes Aussehen. Um zu dem gewünschten Weißgrad (>60) und zu der gewünschten niedrigen Transparenz (< 60 %) zu gelangen, sollte die Basisschicht hochgefüllt sein. Die Partikelkonzentration zur Erzielung der gewünschten niedrigen Transparenz liegt bei über 3 Gew.-%, jedoch unterhalb von 20 Gew.-%, vorzugsweise über 4 Gew.-%, jedoch unterhalb 18 Gew.-% und ganz besonders bevorzugt oberhalb 5 Gew.-%, jedoch unterhalb 16 Gew.-%, bezogen auf das Gesamtgewicht der sie enthaltenden Schicht.

Es wurde gefunden, dass bei der bevorzugten Verwendung von im wesentlichen TiO$_2$. als einfärbendem Pigment die Folie weniger anfällig gegenüber Einreißen und Delaminierung wird. Die Zugabe des TiO$_2$ bevorzugt über die Masterbatchtechnologie hat den Vorteil, dass Farbunterschiede z. B. durch nicht konstante Regenerateigenschaften relativ leicht korrigiert werden können. Bei Verwendung von TiO$_2$ als alleinigem Pigment wird die Folie besonders glatt und damit glänzender, neigt aber eventuell zum Verblocken.

Zu einer weiteren Steigerung des Weißgrades können geeignete optische Aufheller der Basisschicht und/oder den anderen Schichten zugesetzt werden. Geeignete optische Aufheller sind beispielsweise ®hostalux KS oder ®Eastobrite OB-1.

Die Basisschicht als auch vorhandene weitere Schichten können zusätzlich übliche Additive z. B. Stabilisatoren enthalten. Sie werden üblicher Weise dem Polymer oder der Polymermischung vor dem Aufschmelzen zugesetzt. Als Stabilisatoren werden beispielsweise Phosphorverbindungen wie Phosphorsäure oder Phosphorsäureester eingesetzt.

Die Dicke der Polyesterfolie kann innerhalb weiter Grenzen variieren. Sie beträgt im allgemeinen 10 bis 120 $\mu$m, vorzugsweise 15 bis 105 $\mu$m, insbesondere 20 bis 80 $\mu$m, wobei die Basisschicht einen Anteil von bevorzugt 50 bis 100 % an der Gesamtdicke hat.

Mindestens eine Seite der Folie ist mit einer wässrigen haftvermittelnden Dispersion beschichtet. Die Beschichtung auf der fertigen Folie weist eine Dicke von 5 bis 2000 nm, bevorzugt 10 bis 1000 nm, insbesondere 20 bis 500 nm auf. Die Beschichtung wird In-line aufgebracht, d.h. während des Folienherstellprozesses, zweckmäßigerweise vor der Querstreckung. Besonders bevorzugt ist die Aufbringung der Beschichtung mittels des "reverse gravure-roll coating"-Verfahrens, bei dem sich die Beschichtungen äußerst homogen auftragen lassen. Ebenfalls bevorzugt ist die Aufbringung der Beschichtung durch das Meyer-Rod-Verfahren, mit dem sich größere Beschichtungsstärken erzielen lassen.

Diese haftvermittelnde Schicht besteht aus einem aminofunktionalen Silan, welches die Folie dampfsterilisierfest macht (das Laminat z.B. aus Folie, Beschichtung, Kleber oder aufgebrachten metallischen und keramischen Schichten delaminiert nicht) und darüber hinaus für die direkte Extrusionsbeschichtung mit Polymeren aufnahmebereit macht.

Die Erfindung repräsentiert daher auch ein dampfsterilisierbares Laminat, bestehend aus einer orientierten Polyesterfolie, einer haftvermittelnden Schicht und einem direkt extrudierten Polymer.

Die haftvermittelnde Schicht, d.h. das hierfür eingesetzte Silan hat in unhydrolysiertem Zustand folgende generelle Formel:

$$(R^1)_a Si(R^2)_b(R^3)_c,$$

wobei $R^1$ eine funktionelle Gruppe mit zumindest einer primären Aminogruppe ist. $R^2$ ist eine hydrolysierbare Gruppe, z.B. eine kurzkettige Alkoxy-Gruppe mit 1-8 Kohlenstoffatomen, eine Acetoxy-Gruppe oder ein Halogenid. $R^3$ ist eine unreaktive, nichthydrolysierbare Gruppe, entweder eine kurzkettige Alkyl-Gruppe mit 1-8 Kohlenstoffatomen oder eine Phenylgruppe; in der Formel bedeutet (a) größer oder gleich 1; (b) größer oder gleich 1; (c) größer oder gleich 0; wobei a+b+c=4 ist.

Silane sind nach der Hydrolyse wasserlöslich oder können in Wasser dispergiert werden, wobei aminofunktionale Silane besonders gut wasserlöslich sind. Es wurde gefunden, dass Aminosilane eine gute Haftung zu Farben, Kleber, Primer und metallischen und keramischen Schichten auch nach der Dampfsterilisation aufweisen und ebenso eine gute Haftung von extrusionsbeschichteten Polymeren zu Polyesterfolien ohne eine zusätzliche haftvermittelnde Schicht oder Corona-Behandlung haben.

So wird das aminofunktionale Silan z.B. in Wasser hydrolysiert und auf eine oder mehrere Oberflächen des orientierten Polyesters mit konventionellen Methoden wie Sprüh- oder Rollenbeschichtung aufgebracht. Wenn die Silanbeschichtung einmal getrocknet ist, ist der so grundierte Polyester dampfsterilisierbar und aufnahmefähig für die direkte Extrusion mit anderen Polymeren. Die Extrusionsbeschichtung kann mit einem konventionellen Prozess durchgeführt werden. Der Verschnitt von Polyesterfolie mit Aminosilan-Beschichtung kann regeneriert werden.

Beispiele von Aminosilanen, die der genannten Formel entsprechen, sind N-2-(Aminoethyl)-3-aminopropyltrimethoxysilan, 3-Aminopropyltrimethoxysilan, 4-Aminobutyltriethoxysilan, 4-Aminobutyldimethylmethoxysilan, und p-Aminophenyltrimethoxysilan. Bevorzugt ist N-2-(Aminoethyl)-3-aminopropyltrimethoxysilan mit der folgenden Formel:

$$H_2N(CH_2)_2NH(CH_2)_3Si(OCH_3)_3.$$

Das hydrolysierte Aminosilan kann prinzipiell zu jedem möglichen Zeitpunkt bei der Herstellung der Folie aufgetragen werden, d.h. vor oder während des Streckprozesses, es kann auch auf die fertige Folie (z.B.) vor dem Aufrollen aufgebracht werden.

Das hydrolysierte Aminosilan zur Bildung der haftvermittelnden Schicht wird, bezogen auf das unhydrolysierte Aminosilan, auf die Folie als eine wässrige Lösung in einer Konzentration von 0,2 bis 6,0 Gew.-% aufgetragen. Eine schwache Säure wie Essigsäure, Phosphorsäure oder Ähnliche wird dann in Mengen von bis zu 0,2 Gew.-% zugefügt, um die Hydrolyse zu erleichtern. Dabei wird zumindest eine der hydrolysierbaren Gruppen des Silans zu einer Silanol-Gruppe (SiOH) hydrolysiert. Die bevorzugte Konzentration des hydrolysierten Aminosilans liegt bei 0,25 bis 3,5 Gewichtsprozent. Die bevorzugte Konzentration ist derartig, dass schließlich als Ziel ein Trockenantragsgewicht der haftvermittelnden Schicht von 0,5 mg/m$^2$ vorliegt.

Die oben beschriebene Beschichtung ist ausführlich in der EP-A- 0 359 017 dargestellt, auf die an dieser Stelle Bezug genommen wird. Diese Schrift gibt auch Auskunft über weitere spezifische Kombinationen solcher hydrolisierbaren Aminosilanen, auf deren Wiedergabe hier verzichtet wird.

Die Beschichtung kann auf eine oder beide äußere Seiten der Polyesterfolie aufgebracht werden; sie kann aber auch nur auf eine Seite aufgetragen und die Rückseite mit einer weiteren, andersartig aufgebauten Beschichtung versehen werden. Dies kann dann z. B. eine heißhärtende Acrylat- oder Methacrylatbeschichtung sein wie in U.S. Patent No. 4,214,035 beschrieben.

Die Beschichtungsrezeptur kann ebenfalls andere Inhaltsstoffe enthalten, so lange wie diese anderen Inhaltsstoffe die haftungsunterstützenden Eigenschaften des hydrolysierten Aminosilans nicht mindern. Dazu gehören kleinere Mengen von kolloidalem Silika, Farbstoffen, pH-Regulatoren, Benetzungshilfsmittel oder ähnliche.

Ein mit der haftvermittelnden Schicht beschichteter Verschnitt, der während der Folienproduktion entsteht, kann gehäckselt, mit frischem Polymer gemischt, wieder aufgeschmolzen und zur Produktion von orientierten Folien extrudiert werden. Bei einer derart mit signifikanten Mengen beschichteten Regenerats in einem Anteil von bis zu ca. 60 Gew.-%, bevorzugt 10 bis 50 Gew.%, jeweils bezogen auf das Gesamtgewicht der Folie produzierten Folie, werden dabei die physikalischen Eigenschaften der Folie nicht nennenswert negativ beeinflusst. Folglich bietet die mit der haftvermittelnden Schicht beschichtete Folie kommerzielle Vorteile für den Folienhersteller gegenüber anderen beschichteten Folien. So neigen Folien, die mit Vinylidenchlorid enthaltenden Polymeren beschichtet werden (vgl. die US 2,627,088 und US 2,698,240), abzubauen und sich zu verfärben, wenn sie in der beschriebenen Weise regeneriert werden.

Ein besonderer Vorteil der Erfindung besteht darin, dass die Herstellungskosten der Folie nur unwesentlich über denen einer Folie aus Standardpolyesterrohstoffen liegen. Die verarbeitungs- und gebrauchsrelevanten Eigenschaften der Folie sind gegenüber Folien nach dem Stand der Technik deutlich verbessert.

Im folgenden ist ein Verfahren zur Herstellung der Folien beschrieben. Es umfasst

- das Herstellen einer ein- oder mehrschichtigen Folie aus einer Basisschicht B und gegebenenfalls Deckschicht(en) A (und C) durch Koextrusion und Ausformen der Schmelzen zu flachen Schmelzefilmen,
- Beschichten der Folie mit der wasserlöslichen, haftvermittelnden und dampfsterilisierbaren Schicht (vorzugsweise zwischen dem ersten und dem zweiten Streckschritt),
- biaxiales Strecken der Folie und Thermofixieren der gestreckten Folie,

wobei die Beschichtung vor, während oder nach der biaxialen Orientierung erfolgt.

Zunächst wird das Polymer bzw. die Polymermischung für die einzelnen Schichten in einem Extruder komprimiert und verflüssigt. Die Schmelze(n) wird (werden gleichzeitig) durch eine Breitschlitzdüse gepresst, und die ausgepresste (mehrschichtige) Folie wird auf einer oder mehreren Abzugswalzen abgezogen, wobei sie abkühlt und sich verfestigt.

Die biaxiale Verstreckung wird im allgemeinen sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die biaxiale Verstreckung von PET im allgemeinen durchgeführt werden kann, kann in einem relativ großen Bereich variieren und richtet sich nach den gewünschten Eigenschaften der Folie. Die Längsstreckung wird im allgemeinen bei ca. 80 bis 140 °C und die Querstreckung bei ca. 80 bis 150 °C durchgeführt. Das

Längsstreckverhältnis $\lambda_{MD}$ liegt dabei im Bereich von 2,0:1 bis 5:1. Das Querstreckverhältnis $\lambda_{TD}$ liegt im allgemeinen im Bereich von 2,5:1 bis 5,0:1.

Bevorzugt vor der Querstreckung werden eine oder beide Oberflächen der Folie nach den bekannten Verfahren mit der wasserlöslichen haftvermittelnden und dampfsterilisierbaren Schicht beschichtet.

Für die Herstellung einer Folie mit sehr gutem Abzieh- und Delaminierungsverhalten (die Folie darf beim Abziehen nicht Delaminieren) hat es sich als günstig erwiesen, wenn der R-Wert der Folie kleiner als 43 N/mm$^2$ und das $e_{max}$-Verhältnis kleiner als 2,5 ist. In diesem Fall ist die Festigkeit der Folie in Dickenrichtung so groß, dass beim Abziehen des Deckels vom Becher die Folie definitiv nicht delaminiert bzw. nicht einreißt oder weiterreißt.

Die wesentlichen Einflussgrößen auf den R-Wert und das $e_{max}$ Verhältnis der Folie sind die Verfahrensparameter in der Längsstreckung und in der Querstreckung sowie der SV-Wert der verwendeten Rohstoffe. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$) und die Folienbahngeschwindigkeit.

Erhält man beispielsweise auf einer Folienanlage R-Werte und $e_{max}$-Verhältnisse, die oberhalb der oben genannten Werte liegen, so können trotzdem geeignete Folien hergestellt werden, indem man in der Längsstreckung und in der Querstreckung die Temperaturen erhöht und/oder in der Längsstreckung und in der Querstreckung die Streckverhältnisse erniedrigt. Übliche Werte für die genannten Parameter bei Folien, die nicht für Joghurtbecher-Deckel verwendet werden, sind

|  | Längsstreckung | Querstreckung |
| --- | --- | --- |
| Strecktemperaturen | 80 bis 118°C | 90 bis 120 °C |
| Streckverhältnisse | 4,2 bis 4,8 | 4,1 bis 4,4 |

Bei den geeigneten Folien liegen die Temperaturen und Streckverhältnisse dagegen jedoch innerhalb von Bereichen, wie sie die nachstehende Tabelle wiedergibt.

|  | Längsstreckung | Querstreckung |
| --- | --- | --- |
| Strecktemperaturen | 80 bis 130 °C | 80 bis 135 °C |
| Streckverhältnisse | 2,5 bis 4,0 | 3,5 bis 4,0 |

Ein weiteres Absenken der Streckverhältnisse ist nicht vorteilhaft, da sich sonst in der Folie Defekte zeigen können, die unerwünscht sind. Wird beispielsweise das Längsstreckverhältnis unterhalb einem Wert von 2,5 abgesenkt, so erhält man in der Folie unter Umständen Querschläge, die man deutlich sieht.

Erhält man beispielsweise mit einer Maschine bei der Folienherstellung einen R-Wert von 50 N/mm$^2$ mit dem Parametersatz $\lambda_{MD}$ = 4,8 und $\lambda_{TD}$ = 4,0, den Strecktemperaturen in Längs- und in Querrichtung $T_{MD}$ = 115 °C und $T_{TD}$ = 90 - 125 °C, so erhält man durch Erhöhung der Längsstrecktemperatur auf $T_{MD}$ = 125 °C oder durch Erhöhung der Querstrecktemperatur auf $T_{TD}$ = 90 - 135 °C oder durch Absenkung des Längsstreckverhältnisses auf $\lambda_{MD}$ = 4,0 oder durch Absenkung des Querstreckverhältnisses auf $\lambda_{TD}$ = 3,6 einen R-Wert von 38. Dabei hat sich überraschenderweise herausgestellt, dass durch diese Maßnahmen auch das $e_{max}$-Verhältnis in den gewünschten Bereich gelangt. Die Bahngeschwindigkeit der fertigen Folie betrug hierbei 140 m/min und der SV-Wert der Folie 730. Die Temperaturen beziehen sich bei der Längsstreckung auf die Walzentemperaturen und bei der Querstreckung auf die Folientemperatur, die mittels IR (infrarot) gemessen wurden.

Bei der nachfolgenden Thermofixierung wird die Folie etwa 0,1 bis 10 Sekunden lang bei einer Temperatur von ca. 150 bis 250 °C gehalten. Anschließend wird die Folie in üblicher Weise aufgewickelt.

Die hydrolysierte Aminasilan-Schicht in Form einer wässrigen Beschichtung kann In-line in einem der drei Schritte während der Filmherstellung aufgetragen werden:

- in der *Vor*-Streckphase am Punkt zwischen der Abzugswalze und dem ersten Streckschritt wie im Britischen Patent Nr. 1,411,564 beschrieben;
- in der *Zwischen*-Phase an der Stelle zwischen den Streckvorgängen nach dem ersten, aber vor dem zweiten Strecken wie in U.S. Patent Nr. 4,214,035 beschrieben; oder
- in der *Nach*-Streckphase im Anschluss an die biaxiale Streckung, aber noch vor der Aufwicklung der Folie.

Normalerweise reicht die Hitze, die zum Strecken oder Fixieren der Folie verwendet wird aus, um das Wasser oder andere flüchtige Substanzen zu verdampfen und die haftvermittelnde Schicht zu trocknen; ein zusätzlicher Trocknungsschritt wird dann notwendig, wenn die Beschichtung nach den beschriebenen Heizschritten aufgebracht wird.

In der bevorzugten Ausführungsform wird die Folie vor der Beschichtung zunächst in Längsrichtung gestreckt.

In dieser bevorzugten Ausführungsform wird nach der Längsstreckung die Folie in einer beliebigen Form nach dem Stand der Technik beschichtet. Das kann z.B. durch Walzenbeschichtung, Sprühbeschichtung oder durch Düsenbeschichtung (= "slot-coating") sein.

In einer weiteren bevorzugten Ausführungsform wird die Polyesterfolie durch eine Gravurwalze beschichtet. Die monoaxial orientierte Folie kann auch einer CoronaEntladung nach dem Stand der Technik vor der Beschichtung unterzogen werden. Die Corona-Behandlung schwächt den hydrophoben Charakter der Polyesterfolienoberfläche ab, was der wasserbasierten haftvermittelnden Schicht erlaubt, die Oberfläche besser zu benetzen und folglich die Haftung der haftvermittelnden Schicht zur Folienoberfläche verbessert.

Daneben können dampfsterilisierbare Laminate durch den bekannten Prozess der Extrusionsbeschichtung hergestellt werden, wobei die geschmolzene Polymerschicht kontinuierlich auf die grundierte Oberfläche der laufenden Folienbahn aufgetragen wird. Laminate von Polyester mit Polyethylen, Ethylen-Vinylacetat- oder Ethylen-Methacryl-Säure-Copolymeren, Polyvinyl-Alkohol, Polyvinylacetat und anderen Polymeren können leicht durch Extrusionsbeschichtung hergestellt werden.

Als generelle Anweisung zur Erreichung des gewünschten R-Wertes und des gewünschten $e_{max}$-Verhaltnisses kann zweckmäßiger Weise so verfahren werden, dass man - ausgehend von einem Parametersatz, bei dem die Folie mit nicht zweckmäßigen R-Werten und $e_{max}$-Verhältnissen erhalten wird, entweder:

- die Strecktemperatur in MD-Richtung um $\Delta T$ = 3 bis 15 K, bevorzugt um $\Delta T$ = 5 bis 12 K und besonders bevorzugt um $\Delta T$ = 7 bis 10 K, erhöht oder
- das Streckverhältnis in MD-Richtung um $\Delta\lambda$ = 0,3 bis 0,8, bevorzugt um $\Delta\lambda$ = 0,35 bis 0,7 und besonders bevorzugt um $\Delta\lambda$ = 0,4 bis 0,6, erniedrigt oder
- die Strecktemperatur in TD-Richtung um $\Delta T$ = 4 bis 15 K, bevorzugt um $\Delta T$ = 5 bis 12 K und besonders bevorzugt um $\Delta T$ = 7 bis 10 K, erhöht oder
- das Streckverhältnis in TD-Richtung um $\Delta\lambda$ = 0,3 bis 0,8, bevorzugt um $\Delta\lambda$ = 0,35 bis 0,7 und besonders bevorzugt um $\Delta\lambda$ = 0,4 bis 0,6, erniedrigt.

Sofern zweckmäßig, können auch eine oder mehrere der obigen Maßnahmen miteinander kombiniert werden. Als besonders günstig hat es sich dabei erwiesen, die beiden ersten Maßnahmen miteinander zu kombinieren.

Bevorzugt werden nach der biaxialen Streckung eine oder beide Oberflächen der Folie nach einer der bekannten Methoden zusätzlich corona- oder flammbehandelt. Die Behandlungsintensität liegt im allgemeinen über 50 mN/m.

Die Folie zeigt ein sehr gutes Handling, sehr gute Wickeleigenschaften und ein sehr gutes Verarbeitungsverhalten. Sie zeichnet sich weiterhin durch ein hervorragendes Abziehverhalten vom Becher aus. Insbesondere ist bei der Folie die Tendenz zum Ein- und Weiterreißen und zum Delaminieren äußerst gering. Die Folie eignet sich daher als Verpackungsmaterial für Nahrungs- und Genussmittel, insbesondere als Deckelfolie für Lebensmittelbehältnisse wie Joghurtbecher. Die Folie eignet sich daneben hervorragend zur Verpackung von feuchtigkeits- und/oder luftempfindlichen Nahrungs- und Genussmitteln, die ebenfalls in solchen Bechern enthalten sind.

Die Folie weist daneben hervorragende optische Eigenschaften auf, zeigt hervorragende Weiterverarbeitungseigenschaften und eine ausgezeichnete Rollenaufmachung. Die Folie eignet sich auf Grund ihres sehr guten Handlings und ihrer sehr guten Verarbeitungseigenschaften insbesondere für die Verarbeitung auf schnelllaufenden Maschinen. Außerdem besticht die Folie durch einen hervorragenden Weißgrad, der der Folie zusätzlich ein sehr attraktives, werbewirksames Aussehen verleiht.

Die nachstehende Tabelle (Tabelle 1) fasst die wichtigsten Folieneigenschaften noch einmal zusammen.

**Tabelle 1**

| | | zweckmäßiger Bereich | bevorzugt | besonders bevorzugt | Einheit | Messmethode |
|---|---|---|---|---|---|---|
| 1 | R-Wert | <43 | <42 | <40 | N/mm$^2$ | wie beschrieben |
| 2 | $e_{max}$-Verhältnis | <2.5 | <2.2 | <2.0 | - | wie beschrieben |
| 3 | Transparenz | <60 | <55 | <50 | % | ASTM-D 1033-77 |
| 4 | Weißgrad | >60 | >65 | >70 | - | nach Berger |
| 5 | Dicke | 10-120 | 15-105 | 20-80 | μm | |

(fortgesetzt)

| | | zweckmäßiger Bereich | bevorzugt | besonders bevorzugt | Einheit | Messmethode |
|---|---|---|---|---|---|---|
| 6 | Reibung der beschichteten Seite gegen sich selbst (COF) | <0,6 | <0.55 | <0,5 | - | DIN 53 375 |
| 7 | Mittlere Rauigkeit der beschichteten Seite | <50 | <45 | <40 | nm | DIN 4768, Cut-off von 0.25 mm |
| 8 | Glanz (20°-Messwinkel) | >50 | >55 | >60 | - | DIN 67 530 |
| 9 | Gelbzahl | <50 | <45 | <40 | - | ASTM-D 1925-70 |
| 10 | Füllstoffkonzentration der Basisschicht (Weißpigment) | >3 und <20 | >4 und <18 | >5 und <16 | Gew.-% | |
| 11 | Metallhaftung, Haftung zu Klebern oder zu durch Direktextrusion aufgebrachten Polymeren vor der Sterilisierung (mittlere Schälkraft) | >2,5 | >3,0 | >3,5 | N/25 mm | wie beschrieben |
| 12 | Metallhaftung, Haftung zu Klebern oder zu durch Direktextrusion aufgebrachten Polymeren nach der Sterilisierung (mittlere Schälkraft) | >2,0 | >2,5 | >3,0 | N/25 mm | wie beschrieben |
| Zur Charakterisierung der Rohstoffe und der Folien wurden die folgenden Messmethoden benutzt: DIN = Deutsches Institut für Normung ASTM= American Society for Testing and Materials | | | | | | |

Transparenz

Die Transparenz wird in Anlehnung an ASTM-D 1033-77 gemessen.

Gelbzahl

Die Gelbzahl der Folie wird nach ASTM-D 1925-70 mittels eines Spektralphotometers Typ Lamda 12 der Firma Perkin Elmer (USA), Normlichtart D65, 10° Normalbeobachter bestimmt. Aus den gemessenen Normfarbwerten X, Y, Z erfolgt die Berechnung der Gelbzahl YI gemäß der Gleichung

$$YI = [100 \times (1,28 \times X - 1,06 \times Z)] / Y$$

Weißgrad

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ELREPHO der Firma Zeiss, Oberkochen (DE), Normlichtart C, 2° Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (siehe hierzu DIN 5033, Teil 9) verwendet. Eine ausführliche Beschreibung ist z. B. in Hansl Loos, Farbmessung, Verlag Beruf und Schule, Itzehoe (1989) beschrieben.

SV-Wert (Standard Viskosität)

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV = [\eta] = 6{,}907 \cdot 10^{-4}\, SV\, (DCE) + 0{,}063096\, [dl/g]$$

Reibung

Die Reibung wird nach DIN 53 375 bestimmt. Die Gleitreibungszahl wird 14 Tage nach der Produktion gemessen.

Rauigkeit

Die Rauigkeit wird nach DIN 4768 bestimmt.

Glanz

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

Bestimmung des R-Wertes

Der R-Wert der Folie wird in der Mitte der Folienbahn gemessen.

**Folienstreifen rechts**

MD

**Folienstreifen links**

MD

Wie die schematische Darstellung zeigt, werden dazu 2 Folienstreifen von 15 mm Breite und 200 mm Länge (Folienstreifen rechts und links = Fr und Fl) jeweils unter einem Winkel von 45° zur MD-Richtung aus der Bahnmitte der Folie herausgeschnitten, in ein Zug-Dehnungsmessgerät (Fa. Zwick, Typ 010, Ulm, DE) eingespannt und gedehnt. Der jeweilige R-Wert wird unter Zugrundelegung folgender Gleichung berechnet:

$$\text{R-Wert}_{(Fl)} = 1/3 \times (\sigma_{30\%\,(Fl)} - \sigma_{0.2\%\,(Fl)})\ \text{N/mm}^2$$

$$\text{R-Wert}_{(Fr)} = 1/3 \times (\sigma_{30\%\,(Fr)} - \sigma_{0.2\%\,(Fr)})\ \text{N/mm}^2$$

In dieser Gleichung haben die Messgrößen $\sigma_{30\%}$ und $\sigma_{0.2\%}$ die folgende Bedeutung:

$\sigma_{30\%}$ =     Zugspannung in der Folie bei 30 % Dehnung, gemessen unter 45° zur MD-Richtung von beiden Proben,
$\sigma_{0,2\%}$ =     Zugspannung in der Folie bei 0,2 % Dehnung, gemessen unter 45° zur MD-Richtung, von beiden Proben.

Bei der Folie ist der R-Wert der Folie sowohl beim Folienstreifen rechts als auch beim Folienstreifen links kleiner als:

$$\text{R-Wert} < 43\ \text{N/mm}^2$$

Bestimmung des $e_{max}$-Verhältnisses

Das $e_{max}$-Verhältnis wird über die gesamte Breite der Folienbahn (d, h, über die Breite der Maschinenrolle) bestimmt. Der Abstand zwischen zwei Messpunkten (in TD-Richtung, = Breitenrichtung der Folienbahn) beträgt dabei üblicherweise 50 cm. Wie bei der Bestimmung des R-Wertes werden auch hier für jeden Messpunkt 2 Folienstreifen von 15 mm Breite und 200 mm Länge (Folienstreifen rechts und links = Fr und Fl) jeweils unter einem Winkel von 45° zur MD-Richtung aus der Folienbahn herausgeschnitten, wobei die Mitte der Streifen den jeweiligen Abstand zum Rand der Folienbahn bestimmt.

Das Schema der Musternahme für die Bestimmung des $e_{max}$-Vertlältnisses wird nochmals durch unten stehende Skizze verdeutlicht:

**Breite der Folienbahn**

**Bahnmitte**

MD

TD

Das $e_{max}$-Verhältnis an der jeweiligen Stelle der Folienbahn wird unter einem Winkel von 45° zur MD-Richtung unter Einsatz der beiden Proben gemessen. In der Folienbahnmitte ist das $e_{max}$-Verhältnis nahezu eins und vergrößert sich umso mehr, je weiter man von der Folienbahnmitte zu den Folienrändem gelangt.

Die Muster werden dann in einem Zug-Dehnungsmessgerät, wie oben bei der Bestimmung des R-Wertes beschrieben, gedehnt. Das $e_{max}$-Verhältnis an der jeweiligen Stelle der Folienbahn wird unter Zugrundelegung der folgenden Gleichung berechnet:

$$e_{max}\text{-Verhältnis:} = \varepsilon_{Fl}/\varepsilon_{Fr} \text{ oder } \varepsilon_{Fr}/\varepsilon_{Fl}$$

$\varepsilon_{Fl}$ ist die Reißdehnung der Folie unter 45° zur MD-Richtung, links
$\varepsilon_{Fr}$ ist die Reißdehnung der Folie unter 45° zur MD-Richtung, rechts.

Von der Definition her ist das $e_{max}$-Verhältnis immer größer als 1. Bei der Messung über die Folienbahnbreite folgt daraus, dass ungefähr für die erste Hälfte der Bahn die erste Relation $\varepsilon_{Fl}/\varepsilon_{Fr}$ gilt und für die zweite Hälfte der Bahn die zweite Relation gilt $\varepsilon_{Fl}$. Es hat sich gezeigt, dass bei der Folie das $e_{max}$-Verhältnis an jeder Stelle über die Breite der Folie kleiner als 2,5 ist:

$$e_{max}\text{-Verhältnis} < 2,5.$$

Beurteilung des Abziehverhaltens der Folie von einem Joghurtbecher

Die Beurteilung des Abziehverhaltens der Folie vom Becher erfolgt visuell. Bei diesem Prüfverfahren wird die Folie (der Deckel) auf den Becher geklebt (Siegellack ist z. B. ®Novacote) und nach einer Lagerzeit (Aushärtzeit) von 48 Stunden vom Becher abgezogen. Das Abziehverhalten wird mit

++ (= gut) bewertet, wenn die Folie dabei weder einreißt noch delaminiert;
-- (= schlecht) bewertet, wenn die Folie dabei einreißt und/oder delaminiert.

Haftung zu Klebern, metallischen und keramischen Schichten und die Haftung zu Polymeren, die durch Direktextrusion auf die beschichtete Seite aufgebracht worden sind

Im folgenden wird nur die Messung der Haftkraft zu Klebern beschrieben. Die entsprechenden anderen Messungen sind analog auszuführen.

Das Folienmuster (300 mm längs. 180 mm quer) wird vor dem Verkleben auf einen glatten Karton (200 mm längs. 180 mm quer; Gewicht ca. 400 g/m², gebleicht, Außenlagen gestrichen) gelegt, die beiden überstehenden Folienenden (je 50 mm) sind auf die Rückseite umzuschlagen und mit Klebeband zu fixieren.

Die Verklebung der Folie mit einer Standardpolyesterfolie von 12 μm Dicke (z.B. ®Melinex 800) wird mit einem Rakelgerät und Rakelstab Nr. 3 der Fa. Erichsen durchgeführt, wobei zuerst ca. 1,5 ml Klebstoff (Novacote NC 275+CA 12; Mischverhältnis: 4/1 + 7 Teile Ethylacetat) auf die Oberfläche des vorstehend genannten Folienmusters aufgetragen wird. Nach dem Auslüften des Lösemittels wird die Standardpolyesterfolie von entsprechender Größe mit einer Metallrolle (Breite 200 mm, Durchmesser 90 mm, Masse 10 kg, nach DIN EN 20 535) auf die mit Klebstoff versehene Oberfläche des Folienmusters aufkaschiert, wobei die Standardpolyesterfolie an den Enden mindestens 50 mm übersteht. Die Parameter der Kaschierung sind:

| | |
|---|---|
| Klebstoffmenge: | 5 (+/-1) g/m² |
| Lüften nach Auftrag des Klebers: | 4 min (+/-15 s) |
| Rakelstärke (Erichsen): | 3 |
| Geschwindigkeitsstufe des Rakels: | ca. 133 mm/s |
| Aushärtzeit des Verbundes: | 2 h bei 70 °C in einem Umluftofen |

Mit einem Streifenschneider der Breite 25(+/-1) mm werden dem beschriebenen Verbund (kaschiertes Prüfmuster) ca. 100 mm lange Proben entnommen, die aus ca. 50 mm Verbund und 50 mm unverklebten Einzellagen bestehen. Die Letzteren sind zum Fixieren/Einspannen des Prüfkörpers notwendig. Die Prüflinge sind mittels doppelseitigem Klebeband mit der Rückseite der Folie (Basisschicht B oder Deckschicht C) vollflächig auf einem Trägerblech zu fixieren. Die Platte mit dem aufgeklebten Verbund ist in die untere Spannbacke der Zugprüfmaschine einzuspannen. Der Klemmabstand beträgt 100 mm. Das nicht kaschierte Ende der Standardpolyesterfolie, das sind 50 mm, ist so in die obere Spannbacke der Zugprüfmaschine (z.B. Instron, Zwick) einzuspannen, dass sich ein Schälwinkel von 180° ergibt. Angegeben wird die mittlere Schälkraft in N/25 mm (s. Tabelle 1, Nr 11 und 12), gerundet auf eine Nachkommastelle.

| | |
|---|---|
| Probenbreite: | 25 mm |
| Vorkraft: | 0,1 N |
| Messlänge: | 25 mm |
| Abzugsgeschwindigkeit bis Vorkraft: | 25 mm/min |
| Vorweg: | 5 mm |
| Prüfweg: | 40 mm |
| Empfindlichkeit: | 0,01 N |
| Abzugsgeschwindigkeit: | 100 mm/min |

Das Messergebnis für die Schälkraft ist gleichzusetzen mit der minimalen Haftkraft zwischen den Schichten, da die Haftkraft zwischen dem Kleber und der Standardfolie deutlich größer ist.

Sterilisierbarkeit

Zur Bestimmung der Sterilisierbarkeit wird die Folie für eine Dauer von 10 Sekunden einem Wasserdampfstrahl mit einer Temperatur von ca. 100 °C ausgesetzt. Anschlie-ßend wird die Haftung, wie oben beschrieben, bestimmt (s. Tabelle 1, Nr 12).

Beispiele

**Beispiel 1**

N-2-(Aminoethyl)-3-aminopropyl-trimethoxysilan (AE-APTMS) (von Dow Corning als Z-6020 und von Union Carbide als A-1120 angeboten) wurde in herkömmlichem Leitungswasser in einer Konzentration von 2,0 Gew.-% dispergiert. Dazu wurde 5%ige Essigsäure in einer Konzentration von 0,2 Gew.-% zugefügt, um die Hydrolyse zu erleichtern.

Es wurden Chips aus Polyethylenterephthalat bei 160 °C auf eine Restfeuchte von weniger als 50 ppm getrocknet und dem Extruder für die Basisschicht B zugeführt. Durch Extrusion und anschließende stufenweise Orientierung in Längsrichtung wurde eine uniaxial orientierte Folie erhalten.

Die längsgestreckte Folie wurde mit einem Korona-Entladungsgerät koronabehandelt und anschließend mit der Reverse-Gravur Technik mit der hydrolysierten Aminosilan-Lösung beschichtet, die wie oben beschrieben, hergestellt wurde.

Die koronabehandelte, längsgestreckte, beschichtete Folie wurde bei einer Temperatur von etwa 110°C getrocknet. Danach wurde die Folie in die transverse Richtung mit einem Streckverhältnis von 3,8 x 1 gestreckt, um eine biaxial orientierte Folie herzustellen. Die Dicke der gestreckten Folie war 55 μm. Anschließend wurde die biaxial orientierte Folie bei einer Temperatur von 230°C hitzefixiert. Das Trockenantragsgewicht der Beschichtung lag bei etwa 2,5 mg/m$^2$.

Basisschicht B:

| 85 Gew.-% | Polyethylenterephthalat mit einem SV-Wert von 800 |
| 15 Gew.-% | PET-Masterbatch der Fa. Sukano (Schindellegi, CH), Polyethylenterephthalat SV-Wert von 800, mit 50 Gew.-% Titandioxid (mittlerer Teilchendurchmesser Titandioxid ca. 0,3 μm). |

Die Herstellungsbedingungen in den einzelnen Verfahrensschritten waren:

| Längsstreckung | Strecktemperatur: | 100 °C |
| | Längsstreckverhältnis: | 3,4 |
| Querstreckung | Strecktemperatur: | 115°C |
| | Querstreckverhältnis: | 3,8 |
| Fixierung | Temperatur: | 230 °C |
| | Dauer: | 3s |

Es wurde eine einschichtige Folie mit sehr guter Optik, einem niedrigen Reibungskoeffizienten, einem sehr guten Verarbeitungsverhalten und einer sehr guten Wickelqualität erhalten. Die Folie zeigte das gewünschte Verhalten beim Abziehen der Folie vom Becher. Die Folie reißt dabei nicht ein und zeigt keine Tendenz zum Delaminieren (Tabelle 2).

**Beispiel 2**

Beispiel 1 wurde wiederholt, wobei die Verfahrensparameter jedoch geändert wurden:

| Längsstreckung | Strecktemperatur: | 120 °C |
| | Längsstreckverhältnis: | 4,0 |
| Querstreckung | Strecktemperatur: | 110°C |
| | Querstreckverhältnis: | 3,4 |
| Fixierung | Temperatur: | 230 °C |
| | Dauer: | 3 s |

Auch unter diesen Bedingungen wurde eine Folie mit sehr guter Optik, einem niedrigen Reibungskoeffizienten, einem sehr guten Verarbeitungsverhalten und einer sehr guten Wickelqualität erhalten. Die Folie zeigte ebenfalls das gewünschte Verhalten beim Abziehen der Folie vom Becher. Die Folie reißt dabei nicht ein und zeigt keine Tendenz zum Delaminieren.

**Beispiel 3**

Beispiel 1 wurde wiederholt, jedoch die Dicke der Folie von 55 μm auf 36 μm reduziert. Auch diese vergleichsweise dünne Folie zeichnet sich durch ein gutes Verarbeitungsverhalten, eine sehr gute Wickelqualität und das gewünschte Abziehverhalten der Folie vom Becher aus.

**Vergleichsbeispiel 1**

Beispiel 1 wurde wiederholt, jedoch wurden die Verfahrensbedingungen geändert:

| Längsstreckung | Strecktemperatur: | 118 °C |
| | Längsstreckverhältnis: | 4,3 |
| Querstreckung | Strecktemperatur: | 110 °C |
| | Querstreckverhältnis: | 4,2 |
| Fixierung | Temperatur: | 230 °C |
| | Dauer: | 3 s |

Die Folie zeigte nicht das gewünschte Verarbeitungsverhalten und insbesondere nicht das gewünschte Verhalten beim Abziehen der Folie vom Becher. Die Folie reißt ein und zeigte eine hohe Tendenz zum Delaminieren.

**Vergleichsbeispiel 2**

Beispiel 1 wurde wiederholt, jedoch wurde die Folie nicht beschichtet. Die Folie zeigte nicht das gewünschte Verarbeitungsverhalten, sie zeigte eine unzureichende Haftung zu Klebern, nicht die gewünschte Dampfsterilisierbarkeit und hatte nicht die geforderte hohe Wickelqualität.
Die Ergebnisse der Beispiele / Vergleichsbeispiele sind in Tabelle 2 zusammengefasst.

## Tabelle 2

| Bei-spiele | Folien-dicke µm | Folien-bahn-breite m | R-Wert N/mm² | $e_{max}$-Verhältnis | Reibung der beiden Oberflächen gegenein-ander | Rauigkeit der beiden Ober-flächen nm | Trans-parenz % | Weiß-grad | Glanz beider Ober-flächen | Gelb-zahl | Haftung vor/nach der Steri-lisation | Abzieh-verhalten |
|---|---|---|---|---|---|---|---|---|---|---|---|---|
| 1 | 55 | 5 | 39 | 1,8 | 0,55 | 28 | 28 | 90 | 72 | 36 | 4,0/3,5 | ++ |
| 2 | 55 | 5 | 37 | 1,7 | 0,556 | 30 | 30 | 90 | 73 | 34 | 4,2/3,4 | ++ |
| 3 | 36 | 5 | 38 | 1,8 | 0,56 | 31 | 35 | 88 | 70 | 30 | 4,1/3,5 | ++ |
| VB1 | 55 | 5 | 51 | 2,7 | 0,356 | 30 | 28 | 90 | 72 | 36 | 4,2/3,4 | - |
| VB2 | 55 | 5 | 39 | 1,7 | 0,49 | 32 | 28 | 90 | 72 | 36 | 2,2/1,5 | - |

Verarbeitungsverhalten    ++    sehr gut      VB = Vergleichsbeispiel

                           +    gut

                           -    mäßig

                           —    schlecht

**Patentansprüche**

1. Verwendung einer ein- oder mehrschichtigen, mindestens eine Basisschicht B enthaltenden, weißen, biaxial orientierten Polyesterfolie, enthaltend einen thermoplastischen Polyester, die zumindest auf einer Seite mit einem haftvermittelnden hydrolysierten aminofunktionalen Silan beschichtet ist und deren Wert kleiner als 43 N/mm$^2$ ist und deren $e_{max}$-Verhältnis kleiner als 2,5 ist, als dampfsterilisierbare Folie, wobei der

$$\text{R-Wert} = \tfrac{1}{3} \cdot (\sigma_{30\%} - \sigma_{0,2\%}) \text{ in N/mm}^2$$

ist und

$\sigma_{30\%}$ die Zugspannung in der Folie bei 30 % Dehnung, gemessen unter 45° zur Maschinenrichtung (MD), einmal zur linken und einmal zur rechten Seite der MD-Richtung und
$\sigma_{0,2\%}$ die Zugspannung in der Folie bei 0,2 % Dehnung, gemessen unter 45° zur Maschinenrichtung (MD), einmal zur linken und einmal zur rechten Seite der MD-Richtung ist und

das

$$e_{max}\text{-Verhältnis} = \varepsilon_{links}/\varepsilon_{rechts} \text{ oder } \varepsilon_{rechts}/\varepsilon_{links}$$

ist (wobei das Verhältnis definitionsgemäß immer >1 ist) und wobei

$\varepsilon_{links}$ die Reißdehnung der Folie unter 45° zu MD, links, ist und
$\varepsilon_{rechts}$ die Reißdehnung der Folie unter 45° zu MD, rechts, ist.

2. Verwendung nach Anspruch 1, **dadurch gekennzeichnet, dass** die Folie einschichtig ist.

3. Verwendung nach Anspruch 1 oder 2, **dadurch gekennzeichnet, dass** die Folie einen symmetrischen Schichtaufbau ABA oder ACBCA aufweist, wobei B die Basisschicht, C die Zwischenschichten und A die Deckschichten der Folie darstellen.

4. Verwendung nach einem oder mehreren der Ansprüche 1 bis 3, **dadurch gekennzeichnet, dass** der R-Wert der Folie kleiner als 42 N/mm$^2$, insbesondere kleiner als 40 N/mm$^2$, und das $e_{max}$-Verhältnis der Folie kleiner als 2,2, insbesondere kleiner als 2,0, ist.

5. Verwendung nach einem oder mehreren der Ansprüche 1 bis 4, **dadurch gekennzeichnet, dass** die Basisschicht B den thermoplastischen Polyester mindestens zu 80 Gew.-% enthält, bezogen auf das Gesamtgewicht der Schicht.

6. Verwendung nach einem oder mehreren der Ansprüche 1 bis 5, **dadurch gekennzeichnet, dass** der Polyester Einheiten aus Ethylenglykol und Terephthalsäure und/oder Einheiten aus Ethylenglykol und Naphthalin-2,6-dicarbonsäure enthält.

7. Verwendung nach einem oder mehreren der Ansprüche 1 bis 6, **dadurch gekennzeichnet, dass** als Polyester der Basisschicht B Polyethylenterephthalat verwendet wird.

8. Verwendung nach einem oder mehreren der Ansprüche 1 bis 7, **dadurch gekennzeichnet, dass** die Folie im wesentlichen nur TiO$_2$ als Weißpigment oder Füllstoff enthält.

9. Verwendung nach einem oder mehreren der Ansprüche 1 bis 8, **dadurch gekennzeichnet, dass** nur die Basisschicht B der Folie mit einem Weißpigment oder Füllstoff ausgestattet ist.

10. Verwendung nach einem oder mehreren der Ansprüche 1 bis 9, **dadurch gekennzeichnet, dass** die Folie das Weißpigment zu mehr als 3 Gew.-%, bevor zugt zu mehr als 4 Gew.-% und insbesondere zu mehr als 5 Gew.-% enthält, bezogen auf das Gesamtgewicht der damit ausgerüsteten Schicht.

**11.** Verwendung nach einem oder mehreren der Ansprüche 1 bis 10, **dadurch gekennzeichnet, dass** die haftvermittelnde Schicht aus einem getrocknetem Rückstand einer hydrolysierten Aminosilanverbindung besteht, deren unhydrolysierte Form die Formel

$$(R^1)_a Si(R^2)_b (R^3)_c,$$

hat, wobei $R^1$ eine funktionelle Gruppe mit zumindest einer primären Aminogruppe ist, $R^2$ ist eine hydrolysierbare Gruppe, ausgewählt aus einer kurzkettigen Alkoxy-Gruppe mit 1-8 Kohlenstoffatomen, einer Acetoxy-Gruppe oder einem Halogenid und $R^3$ ist eine unreaktive, nichthydrolysierbare Gruppe, ausgewählt aus einer kurzkettigen Alkyl-Gruppe mit 1-8 Kohlenstoffatomen oder einer Phenylgruppe; mit (a) größer oder gleich 1; (b) größer oder gleich 1; (c) größer oder gleich 0, wobei a+b+c=4 ist.

**12.** Verwendung nach einem oder mehreren der Ansprüche 1 bis 11, **dadurch gekennzeichnet, dass** die Gesamtdicke der Folie 10 bis 120 $\mu$m, bevorzugt 15 bis 105 $\mu$m, insbesondere 20 bis 80 $\mu$m beträgt.

**13.** Verwendung nach einem oder mehreren der Ansprüche 1 bis 12, **dadurch gekennzeichnet, dass** die Gelbzahl der Folie kleiner als 50 ist.

**14.** Verwendung nach einem der Ansprüche 1 bis 13 als Verpackungsfolie für Nahrungs- und Genussmittel.

**15.** Verwendung nach Anspruch 14 als Deckelfolie für becherförmige Behältnisse, insbesondere Joghurtbecher.

**16.** Verwendung nach einem der Ansprüche 1 bis 13 zur Herstellung eines Laminats.

**Claims**

**1.** The use of a single- or multilayer, white, biaxially oriented polyester film which comprises a thermoplastic polyester and which comprises at least one base layer B, and which has been coated on at least one side with an adhesion-promoting hydrolyzed amino-functional silane, and whose R value is smaller than 43 N/mm$^2$, and whose $e_{max}$ ratio is smaller than 2.5, as steam-sterilizable film, where the

$$R \; value \;\; = \;\; {}^1/_3 \bullet (\sigma_{30\%} - \sigma_{0.2\%}) \; in \; N/mm^2$$

and

$\sigma_{30\%}$ is the tensile stress in the film at 30% tensile strain, measured at 45° to the machine direction (MD), firstly toward the left-hand side, and secondly toward the right-hand side, of MD, and
$\sigma_{0.2\%}$ is the tensile stress in the film at 0.2% tensile strain, measured at 45° to the machine direction (MD), firstly toward the left-hand side, and secondly toward the right-hand side, of MD, and

the

$$e_{max} \; ratio = \varepsilon_{left\text{-}hand \; side} / \varepsilon_{right\text{-}hand \; side} \; or \; \varepsilon_{right\text{-}hand \; side} / \varepsilon_{left\text{-}hand \; side}$$

(where the ratio is defined as always > 1) and where

$\varepsilon_{left\text{-}hand \; side}$ is the tensile strain at break of the film at 45° to MD, left-hand side, and
$\varepsilon_{right\text{-}hand \; side}$ is the tensile strain at break of the film at 45° to MD, right-hand side.

**2.** The use as claimed in claim 1, wherein the film is a single-layer film.

3. The use as claimed in claim 1 or 2, wherein the film has a symmetrical layer structure ABA or ACBCA, where B is the base layer, C are the intermediate layers and A are the outer layers of the film.

4. The use as claimed in one or more of claims 1 to 3, wherein the R value of the film is smaller than 42 N/mm$^2$, in particular smaller than 40 N/mm$^2$, and the $e_{max}$ ratio of the film is smaller than 2.2, in particular smaller than 2.0.

5. The use as claimed in one or more of claims 1 to 4, wherein the base layer B comprises at least 80 % by weight of the thermoplastic polyester, based on the total weight of the layer.

6. The use as claimed in one or more of claims 1 to 5, wherein the polyester contains units derived from ethylene glycol and terephthalic acid, and/or units derived from ethylene glycol and naphthalene-2,6-dicarboxylic acid.

7. The use as claimed in one or more of claims 1 to 6, wherein the polyester used for the base layer B comprises polyethylene terephthalate.

8. The use as claimed in one or more of claims 1 to 7, wherein the film in essence comprises only TiO$_2$ as white pigment or filler.

9. The use as claimed in one or more of claims 1 to 8, wherein only the base layer B of the film has a white pigment or filler.

10. The use as claimed in one or more of claims 1 to 9, wherein the film comprises more than 3 % by weight, preferably more than 4 % by weight, and in particular more than 5 % by weight, of the white pigment, based on the total weight of the layer in which it is present.

11. The use as claimed in one or more of claims 1 to 10, wherein the adhesion-promoting layer is composed of a dried residue of a hydrolyzed aminosilane compound whose unhydrolyzed form has the formula

$$(R^1)_a Si(R^2)_b (R^3)_c$$

where R$^1$ is a functional group having at least one primary amino group, R$^2$ is a hydrolyzable group, selected from a short-chain alkoxy group having 1 to 8 carbon atoms, from an acetoxy group, or from halide, and R$^3$ is an unreactive, non-hydrolyzable group, selected from a short-chain alkyl group having from 1 to 8 carbon atoms or from a phenyl group; where a is greater than or equal to 1; b is greater than or equal to 1; c is greater than or equal to 0, and a + b + c = 4.

12. The use as claimed in one or more of claims 1 to 11, wherein the total thickness of the film is from 10 to 120 $\mu$m, preferably from 15 to 105 $\mu$m, in particular from 20 to 80 $\mu$m.

13. The use as claimed in one or more of claims 1 to 12, wherein the yellowness index of the film is less than 50.

14. The use as claimed in any of claims 1 to 13 as a packaging film for foods and for other consumable items.

15. The use as claimed in claim 14 as lid film for cup-shaped containers, in particular yoghurt cups.

16. The use as claimed in any of claims 1 to 13 for production of a laminate.

**Revendications**

1. Utilisation d'un film de polyester blanc, mono- ou multicouche, orienté biaxialement, comportant au moins une couche de base B, comportant un polyester thermoplastique, qui est revêtu au moins sur une face d'un silane à fonction amino, hydrolysé, promoteur d'adhérence, et dont la valeur R est inférieure à 43 N/mm$^2$ et dont le rapport des valeurs $e_{max}$ est inférieur à 2,5, en tant que film stérilisable à la vapeur,
la valeur R étant égale à 1/3 . ($\sigma_{30\%}$ - $\sigma_{0,2\%}$) en N/mm$^2$ et

$\sigma_{30\%}$ étant la contrainte de traction dans le film à un allongement de 30 %, mesurée sous un angle de 45° par rapport au sens de la machine (MD), une fois du côté gauche et une fois du côté droit du sens MD et
$\sigma_{0,2\%}$ étant la contrainte de traction dans le film à un allongement de 0,2 %, mesurée sous un angle de 45° par rapport au sens de la machine (MD), une fois du côté gauche et une fois du côté droit du sens MD et

le rapport $e_{max}$ étant égal à $\varepsilon_{gauche}/\varepsilon_{droit}$ ou $\varepsilon_{droit}/\varepsilon_{gauche}$ (le rapport étant par définition toujours supérieur à 1) et

$\varepsilon_{gauche}$ étant l'allongement à la rupture du film sous un angle de 45° par rapport à MD, gauche, et
$\varepsilon_{droit}$ étant l'allongement à la rupture du film sous un angle de 45° par rapport à MD, droit.

2. Utilisation selon la revendication 1, **caractérisée en ce que** le film est monocouche.

3. Utilisation selon la revendication 1 ou 2, **caractérisée en ce que** le film a une structure symétrique de couches ABA ou ACBCA, B représentant la couche de base, C représentant les couches intermédiaires et A les couches de recouvrement du film.

4. Utilisation selon une ou plusieurs des revendications 1 à 3, **caractérisée en ce que** la valeur R du film est inférieure à 42 N/mm$^2$ ; en particulier inférieure à 40 N/mm$^2$, et le rapport $e_{max}$ du film est inférieur à 2,2, en particulier inférieur à 2,0.

5. Utilisation selon une ou plusieurs des revendications 1 à 4, **caractérisée en ce que** la couche de base B contient le polyester thermoplastique à raison d'au moins 80 % en poids, par rapport au poids total de la couche.

6. Utilisation selon une ou plusieurs des revendications 1 à 5, **caractérisée en ce que** le polyester contient des motifs éthylèneglycol et acide téréphtalique et/ou des motifs éthylèneglycol et acide naphtalène-2,6-dicarboxylique.

7. Utilisation selon une ou plusieurs des revendications 1 à 6, **caractérisée en ce qu'**on utilise du poly(éthylène-téréphtalate) en tant que polyester de la couche de base B.

8. Utilisation selon une ou plusieurs des revendications 1 à 7, **caractérisée en ce que** le film ne contient pratiquement que du $TiO_2$ en tant que pigment blanc ou charge.

9. Utilisation selon une ou plusieurs des revendications 1 à 8, **caractérisée en ce que** seule la couche de base B est munie d'un pigment blanc ou d'une charge.

10. Utilisation selon une ou plusieurs des revendications 1 à 9, **caractérisée en ce que** le film contient plus de 3 % en poids, de préférence plus de 4 % en poids et en particulier plus de 5 % en poids de pigment blanc, par rapport au poids total de la couche munie de ce pigment.

11. Utilisation selon une ou plusieurs des revendications 1 à 10, **caractérisée en ce que** la couche promotrice d'adhérence est constituée d'un résidu séché d'un composé aminosilane hydrolysé, dont la forme non hydrolysée correspond à la formule

$$(R^1)_a Si(R^2)_b(R^3)_c,$$

dans laquelle $R^1$ est un groupe fonctionnel comportant au moins un groupe amino primaire, $R^2$ est un groupe hydrolysable, choisi parmi un groupe alcoxy à courte chaîne ayant de 1 à 8 atomes de carbone, un groupe acétoxy ou un halogénure, et $R^3$ est un groupe non réactif, non hydrolysable, choisi parmi un groupe alkyle à courte chaîne ayant de 1 à 8 atomes de carbone ou un groupe phényle ; où (a) est supérieur ou égal à 1 ; (b) est supérieur ou égal à 1 ; (c) est supérieur ou égal à 0, la somme a+b+c étant égale à 4.

12. Utilisation selon une ou plusieurs des revendications 1 à 11, **caractérisée en ce que** l'épaisseur totale du film va de 10 à 120 $\mu$m, de préférence de 15 à 105 $\mu$m, en particulier de 20 à 80 $\mu$m.

13. Utilisation selon une ou plusieurs des revendications 1 à 12, **caractérisée en ce que** l'indice de jaune du film est inférieur à 50.

14. Utilisation selon une ou plusieurs des revendications 1 à 13, en tant que film d'emballage pour produits alimentaires et autres produits de consommation.

15. Utilisation selon la revendication 14, en tant que film de couvercle pour des récipients en forme de pots, en particulier des pots de yaourt.

**16.** Utilisation selon l'une quelconque des revendications 1 à 13, pour la production d'un stratifié.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0605130 A
- EP 1176004 A
- EP 0359017 A
- US 4214035 A
- US 2627088 A
- US 2698240 A
- GB 1411564 A